# EUROPÄISCHE PATENTANMELDUNG

(11) **EP 0 982 442 A1**
(43) Veröffentlichungstag der Anmeldung: **01.03.2000**
(21) Anmeldenummer: 99116259.5
(22) Anmeldetag: 18.08.1999
(51) Int. Cl.: E03C 1/33, B23K 33/00

(54) **Metallene Platte mit eingebautem Metallbehälter und Verfahren zu dessen Einbau**

(30) Priorität: 22.08.1998 DE 19838252
(71) Anmelder: Heiser, Jürgen, 76133 Karlsruhe (DE)
(72) Erfinder: Heiser, Jürgen, 76133 Karlsruhe (DE)
(74) Vertreter: Lasch, Hartmut Dipl.-Ing.

(57) **Zusammenfassung**

Ein Metallbehälter (10), insbesondere ein Spülbecken, wird in eine Aussparung (15) einer metallenen Platte (14) eingebaut, indem er über einen am oberen Ende umlaufenden, im wesentlichen horizontalen Kragen (13) an der Platte (14) angeschweißt wird. Um das Einbauen in einfacher und kostengünstiger Weise zu erzielen, wird der Kragen (13) zunächst entsprechend einer vorbestimmten äußeren Konturlinie beschnitten und die Aussparung (15) in der Platte (14) im wesentlichen entsprechend derselben Konturlinie des Kragens (13) ausgebildet. Anschließend wird der Metallbehälter (10) derart in die Aussparung (15) eingesetzt, daß die Außenkante des Kragens (13) und die Innenkante der Aussparung (15) stumpf aneinanderstoßen. In diesem Zustand werden der Metallbehälter (10) und die Platte (14) im Bereich des Stumpfstoßes umlaufend verschweißt.

## Beschreibung

Die Erfindung betrifft ein Verfahren zum Einbauen eines Metallbehälters, insbesondere eines Spülbeckens in eine Aussparung einer metallenen Platte, wobei der Metallbehälter an seinem oberen Ende einen umlaufenden, im wesentlichen horizontalen Kragen besitzt, über den er an der Platte angeschweißt wird. Ferner betrifft die Erfindung eine metallene Platte mit eingebautem Metallbehälter, insbesondere einem Spülbecken.

Der paßgenaue und glatte Einbau eines Metallbehälters, beispielsweise eines Spülbeckens aus Stahl oder Edelstahl in eine ebene metallene Platte, beispielsweise eine sogenannte Tischplatten-Platine aus Stahl oder Edelstahl, ist zur Zeit relativ arbeitsaufwendig und somit kostenintensiv. Das Spülbecken wird üblicherweise mittels einer Umformpresse tiefgezogen, wobei am oberen Ende ein umlaufender, im wesentlichen horizontal abgewinkelter Kragen ausgebildet wird. In die Platte wird eine Aussparung eingebracht, deren Größe etwa dem lichten Innenmaß des Spülbeckens bzw. des Metallbehälters entspricht. Der Metallbehälter wird dann derart an der Unterseite der Aussparung der Platte positioniert, daß der Kragen von unten vollflächig an der Platte anliegt und die Aussparung mit dem Metallbehälter ausgerichtet ist. Das dazu notwendige Einmessen der Position des Metallbehälter relativ zur Aussparung der Platte bedarf präziser Steuerungsgeräte und hochqualifizierter Mitarbeiter, wodurch das Verfahren aufwendig und teuer ist. Anschließend wird der Metallbehälter mittels einer zwischen dem Kragen und Platte ausgebildeten Schweißnaht fixiert. Da zwischen der Innenkante der Ausnehmung und dem Metallbehälter eine Abstufung gegeben ist, muß in einem nachfolgenden Schleifprozeß ein glatter Übergang ausgebildet werden. Insbesondere bei optisch anspruchsvollen Produkten ist dieses Schleifen sehr langwierig und kostenintensiv.

Der Erfindung liegt die Aufgabe zugrunde, ein Verfahren der genannten Art zu schaffen, mit dem ein Metallbehälter in relativ einfacher und kostengünstiger Weise in eine metallene Platte einbaubar ist. Darüber hinaus soll eine entsprechende metallene Platte mit eingebautem Metallbehälter vorgesehen werden.

Hinsichtlich des Verfahrens wird diese Aufgabe erfindungsgemäß dadurch gelöst,
daß der Kragen entsprechend einer vorbestimmten äußeren Konturlinie beschnitten wird,
daß die Aussparung in der Platte im wesentlichen entsprechend der Konturlinie des Kragens ausgebildet wird,
daß der Metallbehälter derart in die Aussparung eingesetzt wird, daß die Außenkante des Kragens und die Innenkante der Aussparung stumpf aneinanderstoßen, und daß der Metallbehälter und die Platte im Bereich des Stumpfstoßes umlaufend verschweißt werden.

Durch die stumpfe Anlage der Außenkante des Kragens an der Innenkante der Aussparung dient die Aussparung auch zur seitlichen Positionierung des Metallbehälter vor und während des Schweißvorganges, so daß die relative Ausrichtung dieser Bauteile wesentlich vereinfacht ist. Darüber hinaus bringt der Stumpfstoß den Vorteil mit sich, daß Abstufungen weitestgehend vermieden sind, so daß die Nacharbeiten, insbesondere das Schleifen der Übergänge - falls es überhaupt nötig sein sollte - in sehr einfacher und schneller Weise durchgeführt werden kann.

In bevorzugter Ausgestaltung der Erfindung erfolgt daß Schneiden des Kragens entsprechend der vorbestimmten Konturlinie nahe dem inneren Ende des Kragens, d.h. im Rundungsbereich zwischen der vertikalen Behälterwandung und dem horizontalen Kragen.

Da der Metallbehälter unter enger Passung in die Aussparung eingesetzt werden soll, ist es vorteilhaft, wenn das Schneiden des Kragens, das Ausbilden der Aussparung und das Verschweißen des Stumpfstoßes entlang der gleichen Bewegungsbahn erfolgt. Dies ermöglicht es, diese 3 Arbeitsvorgänge in einer numerisch gesteuerten Werkzeugmaschine mit jeweils der gleichen Bewegungssteuerung durchzuführen, wobei allenfalls die Größe der Aussparung um ein geringes Maß, beispielsweise 0,1 mm, gegenüber den Abmessungen des Metallbehälter bzw. des Kragens vergrößert werden, um eventuell auftretende Toleranzen ausgleichen zu können.

Da bei dem erfindungsgemäßen Verfahren in vorteilhafter Weise eine numerisch gesteuerte Werkzeugmaschine zum Einsatz kommt, kann zur Erzielung hoher Schnitt- und Schweißpräzision das Schneiden des Kragens, das Ausbilden der Aussparung und das Verschweißen im Bereich des Stumpfstoßes mittels einer Laservorrichtung erfolgen.

Hinsichtlich der metallenen Platte mit eingebautem Metallbehälter, der in eine Aussparung der Platte eingesetzt wird, wird die o.g. Aufgabe erfindungsgemäß dadurch gelöst, daß die Außenkante des Kragens und die Innenkante der Aussparung stumpf aneinanderstoßen und der Metallbehälter und die Platte im Bereich des Stumpfstoßes umlaufend verschweißt sind. Zusätzliche Merkmale der mit dem Metallbehälter versehenen Platte ergeben sich aus den Erläuterungen des Verfahrens.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1a: einen Metallbehälter nach dem Tiefziehen in Aufsicht,
- Figur 1b: den Schnitt I-I in Figur 1a,
- Figur 2a: eine Aufsicht auf eine Platte vor Ausbildung der Aussparung,
- Figur 2b: den Schnitt II-II in Figur 2a,
- Figur 3a: den Metallbehälter gemäß Figur 1a nach Bearbeitung des Kragens,
- Figur 3b: den Schnitt III-III in Figur 3a,
- Figur 4a: die Platte gemäß Figur 2a nach Ausbildung der Aussparung,
- Figur 4b: den Schnitt IV-IV in Figur 4a und
- Figur 5: die Anordnung der Bauteile während des Schweißvorganges.

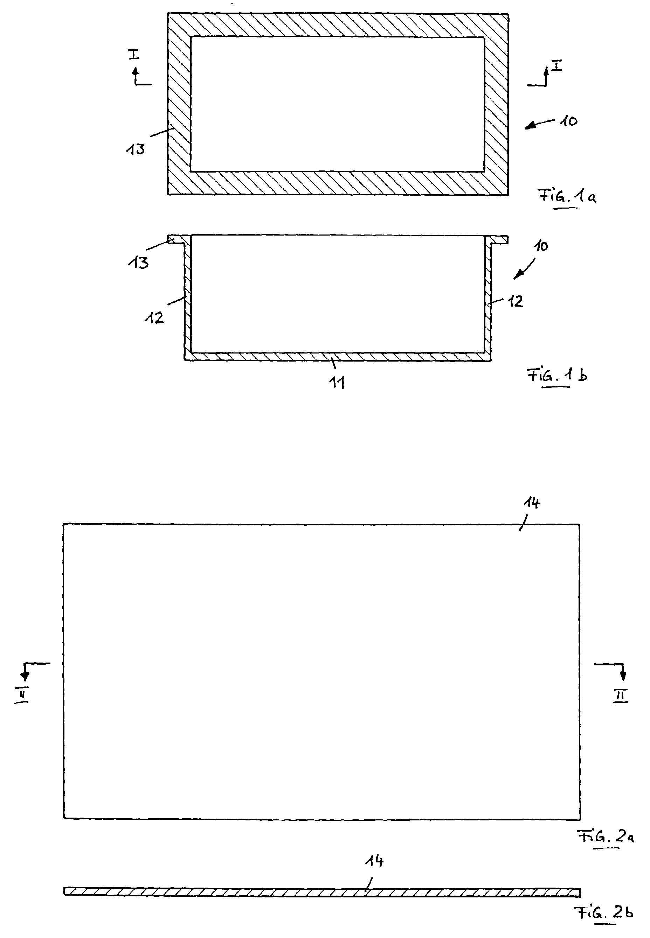

Anhand der Figuren soll das erfindungsgemäße Verfahren im folgenden in seinen einzelnen Schritten erläutert werden. Zunächst wird in einer Umformpresse in bekannter Weise aus einem Stahl- oder Edelstahlblech durch Tiefziehen oder in anderer an sich bekannter Weise ein Metallbehälter 10 ausgebildet, wie er in den Figuren 1a und 1b gezeigt ist. Der Metallbehälter weist einen im wesentlichen horizontalen Boden 11 auf, an den sich vertikale Seitenwände 12 anschließen. Am oberen Ende der Seitenwände 12 ist ein abgewinkelter, sich horizontal nach außen erstreckender Kragen 13 angeformt.

Parallel zu der Ausgestaltung des Metallbehälters 10 wird eine Stahl- oder Edelstahlplatte 14 bereitgestellt, wie sie in den Figuren 2a und 2b als ebene Rechteckplatte dargestellt ist.

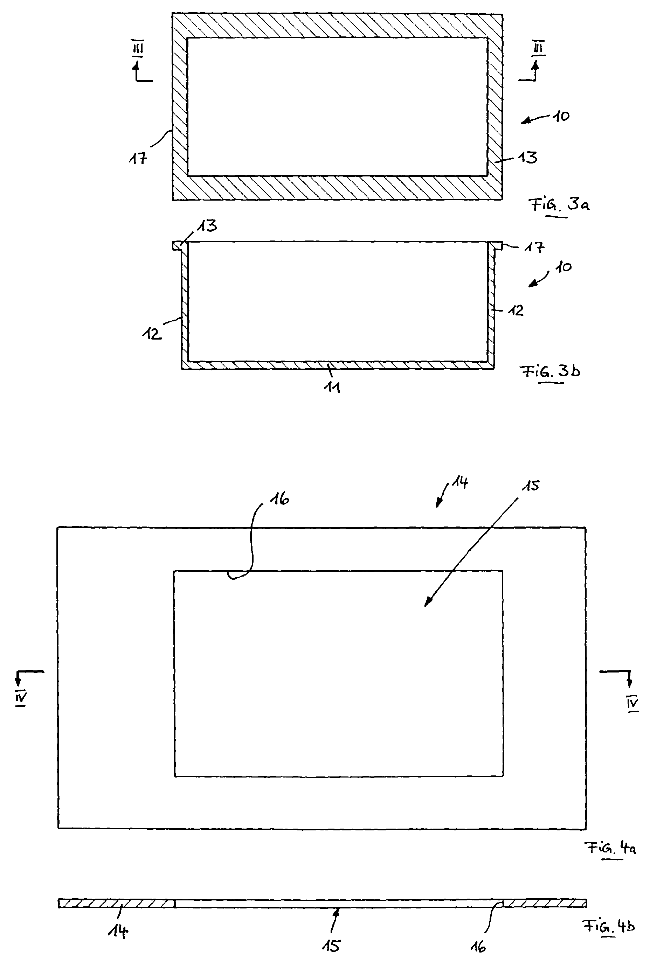

In einem ersten Bearbeitungsschritt wird der Kragen 13 des Metallbehälters 10 in einer numerisch gesteuerten Werkzeugmaschine mittels einer Laser-Schneidvorrichtung entsprechend einer vorgegebenen Konturlinie beschnitten, wobei die Schnittlinie relativ nahe am inneren Ende des Kragens 13, d.h. dem Übergang zu den vertikalen Seitenwänden 12 liegt. Der Metallbehälter nach dem Beschneiden des Kragens 13 ist in den Figuren 3a und 3b dargestellt. Die auf diese Weise ausgebildete Außenkante 17 des Kragens 13 folgt mit hoher Genauigkeit der gewünschten Konturlinie.

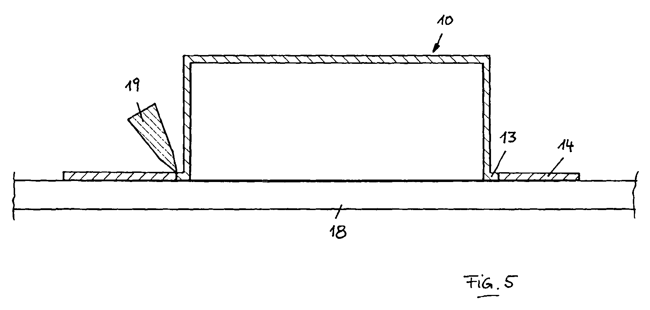

In einem weiteren Arbeitsschritt wird in der Platte 14 mittels der Laser-Schneidvorrichtung eine Aussparung 15 ausgebildet. Dabei kann der Laser-Schneidkopf denselben Bearbeitungsweg bzw. diesselbe Schneidkurve abfahren wie beim Beschneiden des Kragens 13 des Metallbehälters 10, so daß die Innenkante 16 der Aussparung 15 ebenfalls der vorgegebenen Konturlinie folgt. Gegebenenfalls kann die Aussparung 15 mit einer geringfügigen Zugabe im Bereich von 0,1 mm größer als die Außenabmessungen des Kragens 13 des Metallbehälters 10 ausgebildet werden, um Toleranzen zuverlässig ausgleichen zu können. Die mit der Aussparung 15 versehene Platte 14 ist in Figuren 4a und 4b dargestellt.

Zum Einbauen des Metallbehälters 10 in die Platte 14 wird letztere zunächst mit ihrer Oberseite auf einen ebenen Maschinentisch 18 aufgelegt. Anschließend wird der Metallbehälters 10 derart in die Aussparung 15 eingesetzt und gleichzeitig auf den Maschinentisch 18 aufgelegt, so daß die Außenkante 17 des Kragens 13 und die Innenkante 16 der Aussparung 15 stumpf aneinanderstoßen. Aufgrund des Stumpfstoßes ist die relative Positionierung in Querrichtung zwischen der Platte 14 und dem Metallbehälter 10 gegeben, während der Maschinentisch 18 der vertikalen relativen Positionierung dieser beiden Bauteile dient.

Anschließend wird ein Laser-Schweißkopf 19 zugeführt, der die Kontaktlinie zwischen der Außenkante 17 des Kragens 13 und der Innenkante 16 der Aussparung 15 unter Ausbildung einer Schweißnaht entlangfährt, wobei die Bewegungsbahn der zum Beschneiden des Kragens 13 und/oder zum Ausbilden der Aussparung 15 bereits in der Werkzeugmaschine gespeicherten Bewegungsbahn entspricht. Figur 5 zeigt den Zustand während der Ausbildung der Schweißnaht. Da sowohl der Kragen 13 als auch die Platte 14 auf den ebenen Maschinentisch 18 aufliegen, ergibt sich ein oberflächenebener Übergang zwischen diesen Bauteilen.

Falls es notwendig sein sollte, kann der Übergangsbereich abschließend geschliffen und/oder poliert werden.

## Patentansprüche

1. Verfahren zum Einbauen eines Metallbehälters (10), insbesondere eines Spülbeckens, in eine Aussparung (15) einer metallenen Platte (14), wobei der Metallbehälter (10) an seinem oberen Ende einen umlaufenden, im wesentlichen horizontalen Kragen (13) besitzt, über den er an der Platte (14) angeschweißt wird, dadurch gekennzeichnet,
daß der Kragen (13) entsprechend einer vorbestimmten äußeren Konturlinie beschnitten wird,
daß die Aussparung (15) in der Platte (14) im wesentlichen entsprechend der Konturlinie des Kragens (13) ausgebildet wird,
daß der Metallbehälter (10) derart in die Aussparung (15) eingesetzt wird, daß die Außenkante (17) des Kragens (13) und die Innenkante (16) der Aussparung (15) stumpf aneinanderstoßen, und
daß der Metallbehälter (10) und die Platte (14) im Bereich des Stumpfstoßes umlaufend verschweißt werden.

2. Verfahren nach Anspruch 1, dadurch gekennzeichnet, daß das Schneiden des Kragens (13) entsprechend der vorbestimmten Konturlinie nahe dem inneren Ende des Kragens (13) erfolgt.

3. Verfahren nach Anspruch 1 oder 2, dadurch gekennzeichnet, daß das Schneiden des Kragens (13), das Ausbilden der Aussparung (15) und das Verschweißen im Bereich des Stumpfstoßes entlang der gleichen Bewegungsbahn erfolgt.

4. Verfahren nach einem der Ansprüche 1 bis 3, dadurch gekennzeichnet, daß das Schneiden des Kragens (13), das Ausbilden der Aussparung (15) und das Verschweißen im Bereich des Stumpfstoßes mittels einer Laservorrichtung (19) erfolgt.

5. Metallene Platte (14) mit eingebautem Metallbehälter (10), insbesondere Spülbecken, der in eine Aussparung (15) der metallenen Platte (14) eingesetzt ist und an seinem oberen Ende einen umlaufenden, im wesentlichen horizontalen Kragen (13) aufweist, über den er an der Platte (14) angeschweißt ist, dadurch gekennzeichnet, daß die Außenkante (17) des Kragens (13) und die Innenkante (16) der Aussparung (15) stumpf aneinanderstoßen und daß der Metallbehälter (10) und die Platte (14) im Bereich des Stumpfstoßes umlaufend verschweißt sind.
